# EUROPÄISCHE PATENTSCHRIFT

(11) **EP 0 565 532 B1**
(45) Veröffentlichungstag und Bekanntmachung des Hinweises auf die Patenterteilung: **24.07.1996**
(21) Anmeldenummer: 91920614.4
(22) Anmeldetag: 03.12.1991
(51) Int. Cl.: G01N 27/406

(54) **VERFAHREN ZUR HERSTELLUNG EINES SCHICHTSYSTEMS FÜR GASSENSOREN**
METHOD FOR PRODUCING A COAT SYSTEM ON GAS SENSORS
PROCEDE POUR LA FABRICATION D'UN SYSTEME A COUCHES POUR DETECTEURS DE GAZ

(30) Priorität: 04.01.1991 DE 4100107
(43) Veröffentlichungstag der Anmeldung: 20.10.1993
(73) Patentinhaber: ROBERT BOSCH GMBH, 70442 Stuttgart (DE)
(72) Erfinder: FRIESE, Karl-Hermann, D-7250 Leonberg (DE)
(86) Internationale Anmeldenummer: DE9100939
(87) Internationale Veröffentlichungsnummer: WO9212419

(56) Entgegenhaltungen:
- DE-A- 2 631 721
- DE-A- 2 830 778
- DE-A- 2 852 638
- DE-A- 2 852 647
- DE-A- 2 904 069
- US-A- 4 328 296

## Beschreibung

### Stand der Technik

Die Erfindung geht aus von einem Verfahren nach der Gattung des Hauptanspruches. Aus der DE-OS 29 04 069 sind Schichtsysteme für Gassensoren bekannt, insbesondere für Lambdasonden oder polarographische Sonden, wobei auf einen teilstabilisierten Festelektrolytkörper vor Aufbringen von metallischen oder Cermet-Elektroden eine Zwischenschicht aus vollstabilisiertem Zirkoniumdioxid gebildet wird. Durch diese Schichtfolge wird es möglich, die gute mechanische Festigkeit sowie hohe Temperaturschockbeständigkeit von teilstabilisiertem Festelektrolytmaterial auszunützen, dabei aber gleichzeitig die Nachteile dieser Festelektrolytmaterialien in der Sensorfertigung zu vermeiden. Durch irreversible Umwandlung von metastabilem tetragonalem ZrO₂ in monoklines ZrO₂ entstehen Gefügeschäden zunächst an der Oberfläche der Keramik und anschließend durch Rißausbreitung auch im Inneren der Keramik. Monoklines Zirkoniumdioxid hat aber auch den weiteren Nachteil, nahezu nicht O⁻²-ionenleitend zu sein. Daher führt die irreversible Phasenumwandlung von tetragonalem in monoklines Zirkoniumdioxid an der Trennfläche zwischen Festelektrolytkörper und Elektroden zu einem weiteren Nachteil, nämlich zur Verminderung der Dreiphasengrenze Elektrolyt, Elektrode, Meßgas, und damit zu einer Verschlechterung der Elektrodenfunktion.

Die zunächst an der Oberfläche einsetzende Phasenumwandlung des tetragonalen ZrO₂ wird gemäß der DE-OS 29 04 069 durch Aufbringen einer Zwischenschicht aus vollstabilisiertem ZrO₂ zwischen Festelektrolytkörper und Elektrode weitgehend unterbunden.

Weiterhin ist es aus der DE-OS 28 52 638 bekannt, die Belastbarkeit von Gassensoren dadurch zu verbessern, daß für das aus Festelektrolyt und Cermet-Elektroden bestehende Schichtsystem Keramikmaterialien mit unterschiedlicher Sintaktivität eingesetzt werden, wobei das Keramikmaterial für das Stützgerüst der Cermet-Elektrode weniger sinteraktiv sein soll als das Keramikmaterial des Festelektrolyten.

### Vorteile der Erfindung

Das erfindungsgemäße Verfahren mit den Merkmalen des Hauptanspruches liefert demgegenüber eine weitere, verbesserte Möglichkeit, Gassensoren mit guten mechanischen Eigenschaften und hoher Belastbarkeit der Elektroden herzustellen. Indem erfindungsgemäß dem Elektrodenmaterial Stabilisatoroxide in über den zur Vollstabilisierung der Elektrodenkeramik notwendigen Anteilen zugefügt werden, wird ein rationelleres Fertigungsverfahren für das gattungsgemäße Schichtsystem zur Verfügung gestellt, das auf den Auftrag einer vollstabilisierten Zwischenschicht verzichtet.

Die dem Elektrodenmaterial zugefügten Stabilisatoroxide diffundieren entweder als gelöste Verbindungen beim Auftrag der Cermet-Elektrode und beim Zusamensintern oder als ungelöste Verbindungen erst beim Zusammensintern mit dem teilstabilisierten Festelektrolytkörper in die Oberfläche desselben und schaffen dort eine vollstabilisierte Übergangszone mit erhöhter Sauerstoffionenleitfähigkeit, die gleichzeitig die Phasenumwandlung des tetragonalen Festelektrolytmaterials weitgehend verhindert. Innerhalb dieser Übergangszone fällt der Stabilisatoranteil kontinuierlich von der Trennfläche Festelektrolyt-Elektrode zum Inneren des Festelektrolytkörpers hin ab, und unterscheidet sich dadurch von dem stufenartigen Abfall der Stabilisatoroxidanteile, wie er durch Aufbringen einer Zwischenschicht gemäß der DE-OS 29 04 069 erreicht wird. Der kontinuierliche Abfall der Stabilisatoroxidanteile gemäß der vorliegenden Erfindung führt dazu, daß geringere Mengen an Stabilisatoroxiden eingesetzt werden müssen, was mit einer Kostenersparnis sowie auch mit verbesserten mechanischen Eigenschaften des Festelektrolytkörpers verbunden ist. Die Übergangszone entsteht auch nur unmittelbar unter der Cermet-Elektrode, d.h., nur dort, wo die hohe O²-Ionenleitfähigkeit benötigt wird. In den übrigen Oberflächenbereichen der Festelektrolytkeramik kann dagegen die festigkeitssteigernde monokline ZrO₂-Umwandlungszone entstehen.

Aus den obengenannten Gründen ist es vorteilhaft, den Stabilisatoroxidanteil nicht wesentlich über den zur Vollstabilisierung notwendigen Anteil zu erhöhen. Als besonders vorteilhaft hat sich der Zusatz von insgesamt 15 Mol-%Y₂O₃ zu einem Platin-Cermet-Elektrodenmaterial von 60 Vol-% Platin zu 40 Vol-% Zirkoniumdioxid erwiesen.

Gemäß einer weiteren bevorzugten Ausführungsform werden dem Elektrodenmaterial nicht Stabilisatoroxidpulver als solche, sondern Salze, wie z. B. Carbonate, Acetate, Nitrate, Chloride oder metallorganische Verbindungen zugesetzt, die unter Temperatureinwirkung, beim Zusammensintern mit dem Festelektrolytkörper, Stabilisatoroxide bilden.

### Beschreibung der Ausführungsbeispiele

Die Erfindung soll anhand der folgenden Beispiele näher erläutert werden:

### Beispiel 1

Auf eine Festelektrolytkeramikfolie aus kopräzipierten stabilisiertem ZrO₂ mit 4 Mol-%Y₂O₃ wird eine Platin-Cermet-Elektrode aus einer Suspension mit 60 Vol-% Platin/40 Vol-% ZrO₂ mit 4 Mol-% Y₂O₃ aufgebracht, wobei zusätzlich so viel freies Y₂O₃-Pulver zugefügt wird, daß der Yttriumoxidanteil, bezogen auf das Zirkoniumdioxid, insgesamt 15 Mol-% beträgt. Die Suspension wird in bekannter Weise durch Aufsprühen, Aufstreichen, Aufrollen, Tauchen, Walzen, Gießen oder Drucken aufgebracht, getrocknet, und anschließend zusammen mit dem Festelektrolytkörper im gasbeheizten Ofen bei 1400° C mit ca. fünf Stunden Haltezeit gesintert.

### Beispiel 2

Das Schichtsystem wird wie unter Beispiel 1 beschrieben hergestellt, wobei jedoch dem Elektrodenmaterial anstelle von 11 Mol-% freiem Y₂O₃-Pulver 11 Mol-% Yb₂O₃-Pulver zugesetzt werden.

### Beispiel 3

Schichtsystem wie unter Beispiel 1 beschrieben, jedoch mit 11 Mol-% freiem Sc₂O₃-Pulver.

### Beispiel 4

Schichtsystem wie unter Beispiel 1 beschrieben, wobei jedoch dem Elektrodenmaterial anstelle von Y₂O₃ insgesamt 15 Mol-% Yb₂O₃-Pulver zugesetzt werden.

### Beispiel 5

Verfahren wie unter Beispiel 1 beschrieben, wobei jedoch der Festelektrolytkörper aus einer ZrO₂/Y₂O₃-Pulvermischung mit 5 Mol-% Y₂O₃ besteht, und das Elektrodenmaterial 60 Vol-% Platin zu 40 Vol-% mit 4 Mol-% Y₂O₃-stabilisiertem Zirkoniumdioxid enthält, sowie zusätzlich 11 Mol-% freies YO₃.

Es ist weiterhin möglich, andere Stabilisatoroxide einzusetzen, wie z. B. Y₂O₃-Konzentrat, das aus etwa 60 Gew-% Y₂O₃, Rest Oxide der Seltenerdelemente, hauptsächlich der schweren Seltenen Erden besteht, Yb₂O₃-Konzentrat, mit 30 Gew-% Yb₂O₃, Rest hauptsächlich Oxide der schweren Seltenerdelemente, Calciumoxid oder Magnesiumoxid. Alle beschriebenen Schichtsysteme können weitere Schichten tragen, die in bekannter Weise in Plasma- bzw. Flammspritztechnik aufgebracht werden.

## Patentansprüche

1. Verfahren zur Herstellung eines Schichtsystems für Gassensoren mit ionenleitendem Festelektrolyten und Elektroden, die im wesentlichen aus einem Keramikmaterial zur Bildung eines Stützgerüstes und einem elektronenleitenden Material hergestellt werden, dadurch gekennzeichnet, daß dem Elektrodenmaterial Stabilisatoroxide und/oder Verbindungen, die unter Temperatureinwirkung Stabilisatoroxide bilden, in über den zur Vollstabilisierung der Elektrodenkeramik notwendigen Anteilen zugesetzt werden, welche beim Auftrag der Cermet-elektrode und/oder Sinterprozess zumindest teilweise in die Oberfläche des teilstabilisierten Festelektrolyten eindringen und dort vollstabilisierte Übergangsbereiche mit erhöhter Ionenleitfähigkeit schaffen.

2. Verfahren nach Anspruch 1, dadurch gekennzeichnet, daß der Stabilisatoroxidanteil im Elektrodenmaterial 8 bis 20 Mol-%, insbesondere 10 bis 15 Mol-%, beträgt.

3. Verfahren nach einem der vorhergehenden Ansprüche, dadurch gekennzeichnet, daß der Festelektrolyt und das zur Bildung des Stützgerüstes dienende Keramikmaterial zumindest im wesentlichen aus Zirkoniumdioxid und/oder Thoriumoxid und/oder Hafniumoxid bestehen, und daß als Stabilisatoroxide eines oder mehrere der Oxide Y₂O₃, Yb₂O₃, Sc₂O₃, Y₂O₃-Konzentrat, Yb₂-O₃-Konzentrat, Seltenerdoxide, CaO und MgO eingesetzt werden.

4. Verfahren nach einem der vorhergehenden Ansprüche, dadurch gekennzeichnet, daß der Festelektrolyt als Keramikmaterial teilstabilisiertes ZrO₂ und das Elektrodenmaterial als Stabilisatoroxid 15 Mol-% Yttriumoxid enthält.

5. Verfahren nach einem der Ansprüche 1 bis 3, dadurch gekennzeichnet, daß dem Elektrodenmaterial als Verbindungen, die unter Temperatureinwirkung Stabilisatoroxide bilden, Carbonate, Acetate, Nitrate, Chloride oder metallorganische Verbindungen vorzugsweise in gelöster Form zugesetzt werden.

## Claims

1. Process for producing a layer system for gas sensors containing ion-conducting solid electrolyte and electrodes which are essentially produced from a ceramic material to form a supporting structure and from an electron-conducting material, characterized in that stabilizer oxides and/or compounds which form stabilizer oxides on exposure to high temperature, are added to the electrode material in proportions above those necessary for the full stabilization of the electrode ceramic, which stabilizer oxides at least partially penetrate the surface of the partially stabilized solid electrolyte on applying the cermet electrode and/or during the sintering process and produce fully stabilized transition regions at that point which have increased ion conductivity.

2. Process according to Claim 1, characterized in that the proportion of stabilizer oxide in the electrode material is 8 to 20 mol-%, in particular 10 to 15 mol-%.

3. Process according to one of the preceding claims, characterized in that the solid electrolyte and the ceramic material serving to form the supporting structure are composed at least essentially of zirconium dioxide and/or thorium oxide and/or hafnium oxide and that one or more of the oxides Y₂O₃, Yb₂O₃, Sc₂O₃, Y₂O₃ concentrate, Yb₂O₃ concentrate, rare-earth oxides, CaO and MgO are used as stabilizer oxides.

4. Process according to one of the preceding claims, characterized in that the solid electrolyte contains partially stabilized ZrO₂ as ceramic material and the electrode material contains 15 mol-% of yttrium oxide as stabilizer oxide.

5. Process according to one of Claims 1 to 3, characterized in that carbonates, acetates, nitrates, chlorides or organometallic compounds, preferably in dissolved form, are added to the electrode material as compounds which form stabilizer oxides on exposure to high temperature.

## Revendications

1. Procédé de fabrication d'un système à couches pour détecteurs de gaz avec des électrolytes solides conducteurs d'ions et des électrodes, qui sont produits essentiellement en un matériau de céramique pour la formation d'une structure d'appui et d'un matériau conducteur d'électrons, caractérisé en ce qu'on ajoute au matériau d'électrode des oxydes stabilisatants et/ou des composés, qui forment sous l'action de la température des oxydes stabilisants, dans des proportions au-delà de celles nécessaires pour la stabilisation complète de la céramique d'électrodes, éléments qui lors de l'application de l'électrode de cermet et/ou du procédé de frittage pénètrent au moins partiellement dans la surface de l'électrolyte solide partiellement stabilisé et là créent des zones de transition complètement stabilisées avec une conductibilité d'ions augmentée.

2. Procédé selon la revendication 1, caractérisé en ce que la proportion d'oxyde stabilisant dans le matériau d'électrode se monte à 20 % molaire, en particulier 10 à 15 % molaire.

3. Procédé selon une des revendications précédentes, caractérisé en ce que l'électrolyte solide et le matériau céramique servant à la formation de la structure d'appui sont composés essentiellement de dioxyde de zirconium et/ou d'oxyde de thorium et/ou d'oxyde d'hafnium, et en ce que comme oxydes stabilisants on utilise un ou plusieurs des oxydes Y₂O₃, Yb₂O₃, Sc₂O₃, un concentrat de Y₂O₃, un concentrat de Yb₂O₃, des oxydes de terres rares, du CaO et du MgO.

4. Procédé selon une des revendications précédentes, caractérisé en ce que l'électrolyte solide contient comme matériau céramique du ZrO₂ partiellement stabilisé et le matériau d'électrode comme oxyde stabilisant 15 % molaire d'oxyde d'Yttrium.

5. Procédé selon une des revendications 1 à 3, caractérisé en ce qu'on ajoute au matériau d'électrode comme composés, qui forment sous l'action de la température des oxydes stabilisants, des carbonates, des acétates, des nitrates, des chlorures ou des composés organométalliques de préférence sous forme dissoute.
